# NEUE EUROPÄISCHE PATENTSCHRIFT

(11) **EP 2 615 137 B2**
(45) Veröffentlichungstag und Bekanntmachung des Hinweises auf die Entscheidung über den Einspruch: **28.03.2018**
(45) Hinweis auf die Patenterteilung: 07.10.2015
(21) Anmeldenummer: 12000194.6
(22) Anmeldetag: 13.01.2012
(51) Int. Cl.: C08K 5/57, C08L 27/04, C08L 27/06, C08F 14/06, C08K 3/08, F16L 9/133

(54) **Polyvinylchlorid-Zusammensetzung, Rohr, Rinne oder Behälter, Verwendung einer PVC-Zusammensetzung und Verwendung eines Rohrs, einer Rinne oder eines Behälters**
Polyvinyl chloride compound, tube, gutter or container, use of a PVC compound and use of a tube, gutter or container
Composition de chlorure de polyvinyle, tuyau, rainure ou récipient, utilisation d'une composition de PVC et utilisation d'un tuyau, d'une rainure ou d'un récipient

(43) Veröffentlichungstag der Anmeldung: 17.07.2013
(73) Patentinhaber: Georg Fischer DEKA GmbH, 35232 Dautphetal (DE)
(72) Erfinder: Schüssler, Stephan, 35094 Caldem (DE); Weiss, Achim, 35232 Dautphetal-Mornshausen (DE); Wewior, Gerhard, 35216 Biedenkopf (DE); Giersbach, Florian, 57234 Wilnsdorf (DE)
(74) Vertreter: Gleiss & Grosse

(56) Entgegenhaltungen:
- US-A- 2 716 111
- US-A- 5 789 453
- US-B1- 6 187 868
- SKILLICORN D.E. ET AL: 'Molecular weight and solution viscosity characterization of PVC' JOURNAL OF VINYL TECHNOLOGY Bd. 15, Nr. 2, Juni 1993, Seiten 105 - 108

## Beschreibung

Die Erfindung betrifft eine Polyvinylchlorid (PVC)-Zusammensetzung gemäß Oberbegriff des Anspruchs 1, ein Rohr, eine Rinne oder einen Behälter zur Durchleitung und/oder Aufbewahrung von chemisch aggressiven Stoffen gemäß Oberbegriff des Anspruchs 4, eine Verwendung einer Polyvinylchlorid (PVC)-Zusammensetzung nach Anspruch 7, eine Verwendung einer Polyvinylchlorid (PVC)-Zusammensetzung nach Anspruch 8, sowie eine Verwendung eines Rohrs, einer Rinne oder eines Behälters nach Anspruch 9.

Polyvinylchlorid (PVC)-Zusammensetzungen, Rohre, Rinnen oder Behälter zur Durchleitung und/oder Aufbewahrung von chemisch aggressiven Stoffen, sowie Verwendungen von Polyvinylchlorid-Zusammensetzungen sind bekannt. Beispielsweise ist es bekannt, im Anlagenbau hartes, sogenanntes unplastifiziertes PVC, PVC-U, insbesondere im Rohr- und Behälterbau zu verwenden. Problematisch an diesem Material ist, dass es eine Temperaturobergrenze von etwa 60 °C bis 70 °C aufweist, welche durch die Vicat-Erweichungstemperatur des Materials vorgegeben ist. In vielen Fällen verlangt der Anlagenbau jedoch Materialien, welche einer höheren Temperatur Stand halten. Es ist dann möglich, sogenanntes nachchloriertes PVC, PVC-C, einzusetzen, welches eine deutlich höhere Vicat-Erweichungstemperatur aufweist.

Auch dieses Material weist jedoch gravierende Nachteile auf: Zunächst ist es deutlich teurer als PVC-U, und es lässt sich zudem schwieriger verschweißen und/oder thermoformen. Eine Verarbeitung von PVC-C und eine Installation von Komponenten, welche dieses Material umfassen, ist daher aufwändig und teuer. Insbesondere Schweißnähte müssen in vielen Fällen aufwändig und teuer getempert werden. Hinzu kommt, dass das chemische Beständigkeitsprofil von PVC-C aufgrund zwingend zugegebener Schlagzäh-Modifikatoren für viele Anwendungen insbesondere in der Chlorindustrie eingeschränkt ist. Insbesondere weist das Material eine inhärente Labilität gegenüber einem Kontakt mit stark basischen Medien auf. Der Einsatz von PVC-C erscheint im Übrigen aus Kostengründen oft fraglich.

Alternativ ist es bekannt, insbesondere für ein Durchleiten und/oder Aufbewahren von basischen Medien vor allem bei höheren Temperaturen auf den Werkstoff Polypropylen, PP, zurückzugreifen. Auch dieses Material weist jedoch durch seine im Vergleich zu PVC-Polymeren etwa doppelt so hohe thermische Ausdehnung und eine gegenüber Laugen erhöhte Spannungsriss-Empfindlichkeit gravierende Nachteile auf. Auch hier ist es oft angezeigt, aufgrund von in dem Material entstehenden Spannungen Schweißnähte nachzutempern und sehr genau auf die korrekte Auswahl der am besten geeigneten PP-Compounds sowie eine fachgerechte Verschweißung und spannungsarme Installation zu achten. Eine Relaxation der Spannungen verläuft dabei äußerst langsam und benötigt selbst bei einer Temperatur von mehr als 100 °C mehr als 24 Stunden.

Es ist auch bekannt, sogenannte Verbund-Rohre vorzusehen, welche eine thermoplastische innere Wandung, einen sogenannten Inliner, aufweisen, der beispielsweise PVC-U, PVC-C oder PP umfasst. Diese innere Wandung ist mit einer äußeren Hülle kaschiert und/oder verstärkt, welche mindestens einen glasfaserverstärkten Duroplast-Harz, GFK, umfasst. Dabei wirkt der thermoplastische Inliner als chemikalienbeständige Schicht, insbesondere als Korrosionsbarriere, wobei alle mechanischen Belastungen durch die GFK-Hülle aufgenommen werden. Umfasst der thermoplastische Inliner Polyolefine wie Polypropylen oder Polyethylen, PE, erfolgt die Anbindung des Inliners an die GFK-Hülle durch Einschmelzen eines Glasvlieses, insbesondere eines Geflechts aus Glasfasern. Umfasst der thermoplastische Inliner dagegen PVC-U oder PVC-C wird er mit der GFK-Hülle durch mindestens einen Haftharz verbunden.

Insbesondere die Anbindung eines Polypropylen umfassenden Inliners mit Hilfe eines Glasvlieses an die GFK-Hülle bereitet in der Praxis Schwierigkeiten und stellt hohe Anforderungen an die handwerkliche Qualifikation des Verarbeiters und seine Qualitätssicherung. Durch hohe Unterschiede in der thermischen Ausdehnung des PP-Inliners und der GFK-Hülle werden bei starken und häufigen Temperaturänderungen, wie sie insbesondere in der Chlorindustrie durch häufiges Abschalten und Anfahren von Anlageteilen regelmäßig auftreten, hohe Scherkräfte im Bereich der Anbindung der GFK-Hülle an dem PP-Inliner induziert. Zugleich ist eine Wandstärke des chemikalienbeständigen Inliners aufgrund der typischerweise um einen Faktor vier verschiedenen thermischen Ausdehnungskoeffizienten des Inliners und der Hülle auf einen Bereich kleiner als 8 mm beschränkt. Aus diesen Gründen besteht stets die Gefahr einer Rissbildung in dem Inliner und einer Delaminierung desselben von der GFK-Hülle. Die beim Betrieb mit dem Medium Lauge in derartige Risse des Inliners eindringende Lauge reagiert dann vor allem bei den in der Chlorindustrie in diesem Bereich herrschenden hohen Prozesstemperaturen zuerst und außerordentlich schnell mit dem eingeschmolzenen Glasvlies, was zu dessen großflächiger Zerstörung führen kann. Insbesondere entfaltet das Geflecht aus Glasfasern eine Kapillarwirkung, durch welche chemisch aggressive Lauge quasi von dem Geflecht aufgesaugt wird. Dies führt zu einer Beschleunigung der Zerstörung des Inliner-Hülle-Verbundes und zu einem schnellen Fortschreiten der Zerstörung entlang der Länge des Rohres. Es ist möglich, dass sich Beschädigungen aufgrund der Kapillarwirkung des Glasvlieses mit einer Geschwindigkeit von einigen Metern Leitung innerhalb weniger Tage fortpflanzen. Insgesamt droht bei Verwendung solcher Rohre ein regelmäßiger, sehr schneller Ausfall des kompletten Rohrsystems, wodurch extreme Ausfallkosten durch unplanmäßigen Anlagenstillstand und einem dann nötigen Komplettaustausch des Rohrsystems entstehen.

Es ist auch bekannt, Polyvinylidenfluorid (PVDF)-GFK-Verbundrohre zu verwenden oder Ethylen-Chlortrifluorethylen als Material einzusetzen. Diese Lösungen sind sehr teuer und scheiden häufig aus Kostengründen aus. PVDF ist unter den gegebenen Bedingungen auch nicht medienbeständig.

Insgesamt zeigt sich, dass gerade im Bereich der Chlorindustrie eine Vielfalt von verschiedenen Materialien eingesetzt wird. Dies ist aus Kostengründen und auch in Hinblick auf logistische Fragen ein gravierender Nachteil.

Der Erfindung liegt daher die Aufgabe zugrunde, eine PVC-Zusammensetzung zu schaffen, welche die genannten Nachteile nicht aufweist. Die Zusammensetzung soll insbesondere in einem vergleichsweise hohen Temperaturbereich mit überragender Chemikalienbeständigkeit, insbesondere Laugenbeständigkeit, vielfältig einsetzbar sein. Es ist auch Aufgabe der Erfindung, ein Rohr, eine Rinne oder einen Behälter zur Durchleitung und/oder Aufbewahrung von chemisch aggressiven Stoffen zu schaffen, welche die genannten Nachteile nicht aufweist. Die genannten Produkte sollen kostengünstig herstellbar sein, eine hohe thermische Stabilität sowie eine hohe Chemikalienbeständigkeit gegenüber aggressiven Stoffen, wie beispielsweise Laugen, aufweisen. Aufgabe der Erfindung ist es auch, Verwendungen für eine PVC-Zusammensetzung anzugeben, wobei die genannten Nachteile nicht auftreten. Schließlich ist es Aufgabe der Erfindung, Verwendungen eines Rohres, einer Rinne oder eines Behälters zur Durchleitung und/oder Aufbewahrung eines chemisch aggressiven Stoffes anzugeben, wobei die genannten Nachteile nicht auftreten.

Die Aufgabe wird gelöst, indem eine PVC-Zusammensetzung mit den Merkmalen des Anspruchs 1 geschaffen wird. Diese weist ein PVC-Harz mit einer Molekulargewichtsverteilung auf, welche ein Zahlenmittel von M_{N} = 60 kDa bis M_{N} = 70 kDa und ein Gewichtsmittel von M_{W} = 114 KDa bis M_{W} = 124 kDa aufweist. Die Gesamtzusammensetzung weist außerdem einen Chlorgehalt von 56 % bis 62 % auf. Dabei spricht der Begriff "Gesamtzusammensetzung" an, dass die PVC-Zusammensetzung neben dem PVC-Harz weitere Bestandteile umfassen kann. Der in Gewichtsprozent angegebene Chlorgehalt bezieht sich auf die gesamte Zusammensetzung und nicht ausschließlich auf deren PVC-Anteil. Der Begriff "PVC-Harz" spricht die Polyvinylchlorid-Komponente beziehungsweise den PVC-Anteil der Gesamtzusammensetzung an, wobei das PVC-Harz selbst erfindungsgemäß mehr als eine Harzkomponente umfasst beziehungsweise aus mehr als einer Harzkomponente gebildet ist. Dabei umfasst der Begriff "PVC-Harzkomponente" erfindungsgemäß Polyvinylchloride mit unterschiedlichem Chlorgehalt. Die geschickte Kombination einer Molekulargewichtsverteilung, welche durch die genannten Parameterbereiche gekennzeichnet ist, mit einem Chlorgehalt, welcher durch den genannten Bereich definiert ist, führt zu überraschenden Eigenschaften der Polyvinylchlorid-Zusammensetzung. Diese weist eine hohe Chemikalienbeständigkeit insbesondere gegenüber Laugen bei hohen Temperaturen (≤ 95°C) auf und ist zugleich kostengünstig und einfach zu verarbeiten. Insbesondere ist es mit der gleichen Zusammensetzung möglich, Rohre mit einem Außendurchmesser bis zu 600 mm und Wandstärken insbesondere eines Inliners bis ≤ 15 mm, Platten mit Wandstärken ≤ 10 mm und Schweißdraht mit einem Durchmesser von 2 mm bis 4 mm zu extrudieren. Die Zusammensetzung beziehungsweise Komponenten, welche diese umfassen, ist/sind schweißbar, thermoformbar und/oder verklebbar. Insbesondere kann marktübliches Haftharz beim Armieren einer GFK-Schicht zur Anbindung verwendet werden. Dabei liegt eine Verarbeitungstemperatur der Polyvinylchlorid-Zusammensetzung praktisch in demselben Bereich wie bei bekanntem PVC-U. Zugleich erfüllen die Polyvinylchlorid-Zusammensetzung beziehungsweise Komponenten hieraus ohne Weiteres die Forderungen gemäß DIN 8061/62 für Druckrohre. Insgesamt ist die Polyvinylchlorid-Zusammensetzung daher kostengünstig einsetzbar, äußerst chemikalienbeständig, leicht zu verarbeiten und sehr stabil. Sie ist überdies kompatibel mit Komponenten einsetzbar, welche bekanntes PVC-U umfassen.

Bevorzugt weist das PVC-Harz eine monomodale Molekulargewichtsverteilung mit einem Zahlenmittel von M_{N} = 63 kDa bis M_{N} = 67 kDa und einem Gewichtsmittel von M_{W} = 116 kDa bis M_{W} = 120 kDa auf. Der Chlorgehalt der Gesamtzusammensetzung beträgt bevorzugt zwischen 57 % bis 60 %.

Die Molekulargewichtsverteilung wird vorzugsweise durch Gelpermeationschromatographie (GPC) nach Abtrennung der nicht in Tetrahydrofuran (THF) löslichen Bestandteile bestimmt. Als Lösungsmittel wird THF verwendet, vorzugsweise mit einer Flussrate von 0,8 mL/min. Dabei werden bevorzugt Polystyrol-Eichstandards eingesetzt, vorzugsweise kommt ein RI-Detektor der Firma Agilent zum Einsatz. Als Trennsäule werden vorzugsweise zwei PSS SDV Säulen 10µ 8 x 600 mm eingesetzt.

Die Eichstandards werden bevorzugt bezogen von der PSS Polymer Standards Service GmbH, wobei vorzugsweise folgende Standards zum Einsatz kommen:

| Lot.- No. | M_{P}/Da | M_{N}/Da | M_{W}/Da |
|---|---|---|---|
| Ps 200504 | 1820 | 1770 | 1920 |
| Ps 6126 | 3470 | 3260 | 3460 |
| Ps 24076 | 10 400 | 10 000 | 10 300 |
| Ps 12030 | 19 600 | 18 600 | 19 100 |
| Ps 7122 | 34 300 | 33 000 | 34 000 |
| Ps 1073 | 67 500 | 64 000 | 65 000 |
| Ps 10068 | 100 000 | 92 000 | 96 000 |
| Ps 5070 | 250 000 | 236 000 | 248 000 |
| Ps 7082 | 336 000 | 330 000 | 335 000 |
| Ps 61120 | 556 000 | 536 000 | 546 000 |
| Ps 2056 | 824 000 | 769 000 | 803 000 |
| Ps 21036 | 1 044 000 | 970 800 | 1 103 000 |
| Ps 2040 | 2 470 000 | 1 810 000 | 2 010 000 |

Der Chlorgehalt der Gesamtzusammensetzung wird bevorzugt über einen Schöniger-Aufschluss mit anschließender titrimetrischer Bestimmung der Chlorgehalts ermittelt.

Die PVC-Zusammensetzung ist vorzugsweise frei von Polypropylen, Polyvinylidenfluorid und/oder Ethylen-Chlortrifluorethylen.

Erfindungsgemäß zeichnet sich die PVC-Zusammensetzung dadurch aus, dass sie eine Vicat-Erweichungstemperatur von > 88 °C, insbesondere > 90 °C aufweist. Die PVC-Zusammensetzung ist dadurch vielfältig insbesondere in der chemischen Industrie, ganz besonders in der Chlorindustrie einsetzbar, wo sehr viele Prozesse bei einer Temperatur von ungefähr 60 °C bis ungefähr 92 °C ablaufen. Es ist dann in vielen Fällen nicht mehr nötig, auf teurere und letztlich weniger stabile Materialkonzepte auszuweichen.

Die erfindungsgemäße PVC-Zusammensetzung zeichnet sich zudem dadurch aus, dass sie frei ist von Schlagzäh-Modifikatoren. Besonders bevorzugt ist sie frei von zugegebenen Schlagzäh-Modifikatoren. Der Rezeptur für die PVC-Zusammensetzung werden demnach bevorzugt keine Schlägzäh-Modifikatoren zugesetzt. Dies führt zu einer deutlich höheren Stabilität insbesondere gegenüber dem Kontakt mit stark basischen Medien, weil für eine diesbezügliche Anfälligkeit bekannter Zusammensetzungen insbesondere zugegebene Schlagzäh-Modifikatoren verantwortlich sind.

Auch wird eine PVC-Zusammensetzung bevorzugt, die sich dadurch auszeichnet, dass sie frei ist von Kreide und/oder Calcium und/oder Magnesium. Besonders bevorzugt ist sie frei von zugegebener Kreide und/oder zugegebenem Calcium und/oder zugegebenem Magnesium. Der Rezeptur für die Zusammensetzung wird/werden also bevorzugt keine Kreide und/oder kein Calcium und/oder kein Magnesium beziehungsweise keine Kreide umfassenden Substanzen und/oder keine Calcium umfassenden Substanzen und/oder keine Magnesium umfassenden Substanzen zugegeben. Da Kreide wesentlich für eine Säurelabilität bekannter Materialien verantwortlich ist, weist die Polyvinylchlorid-Zusammensetzung eine deutlich erhöhte Stabilität gegenüber Säuren auf. In der Chlorindustrie wird generell ein möglichst niedriger Gehalt von Calcium und/oder Magnesium in dort eingesetzten Komponenten gefordert. Die PVC-Zusammensetzung ist daher besonders geeignet für den Einsatz in der Chlorindustrie.

Es wird auch eine PVC-Zusammensetzung bevorzugt, welche sich dadurch auszeichnet, dass sie Zinn umfasst. Alternativ oder zusätzlich ist vorzugsweise vorgesehen, dass die PVC-Zusammensetzung eine Komponente umfasst, welche Zinn aufweist. Dies kann beispielsweise eine organometallische Stabilisiererkomponente sein. Hierdurch wird bevorzugt eine Stabilisierung mit bleihaltigen Komponenten vermieden, wodurch die PVC-Zusammensetzung toxikologisch unbedenklich ist. Zugleich ist eine Stabilisierung auf der Basis von Zinn beziehungsweise zinnhaltigen Komponenten sehr effizient.

Die Aufgabe wird auch gelöst, in dem ein Rohr, eine Rinne oder ein Behälter zur Durchleitung und/oder Aufbewahrung von chemisch aggressiven Stoffen mit den Merkmalen des Anspruchs 4 geschaffen wird. Diese Produkte zeichnen sich dadurch aus, dass sie eine PVC-Zusammensetzung gemäß einer der zuvor beschriebenen Ausführungsformen umfassen. Hierdurch sind sie kostengünstig und einfach herstellbar, und weisen eine hohe Chemikalienbeständigkeit sowie eine hohe Vicat-Erweichungstemperatur auf. Sie sind also insbesondere chemikalien- und temperaturstabil. Insbesondere das Rohr oder die Rinne wird/werden vorzugsweise im Anlagenbau, insbesondere im großtechnischen, chemischen Anlagenbau, ganz besonders in der Chlorindustrie eingesetzt. Dabei kann auf ein kompliziertes und teueres Nachtempern von Schweißnähten verzichtet werden, weil die PVC-Zusammensetzung einfach und bei ähnlicher Temperatur wie bekanntes PVC-U verarbeitbar ist. Ein Komplettausfall eines Rohrsystems ist unwahrscheinlich, weil die Polyvinylchlorid-Zusammensetzung sehr stabil gegenüber chemischen Belastungen und gegenüber hoher Temperatur sowie - aufgrund ihres im Vergleich zu bekannten Zusammensetzungen deutlich geringeren thermischen Ausdehnungskoeffizienten - insbesondere auch gegenüber Temperaturschwankungen ist. Es ist zudem prinzipiell auch möglich, eine freitragende Rohrkonstruktion auf der Basis der PVC-Zusammensetzung zu realisieren. Insbesondere ist es in vielen Fällen nicht zwingend erforderlich, das Rohr als Verbundrohr auszubilden.

Es wird auch ein Rohr bevorzugt, welches sich dadurch auszeichnet, dass es als Verbundrohr ausgebildet ist. Das Verbund-Rohr umfasst eine Hülle, welche glasfaserverstärktes Duroplast-Harz aufweist. Es weist auch eine innere Wandung auf, welche eine PVC-Zusammensetzung nach einer der zuvor beschriebenen Ausführungsformen umfasst. Es ergeben sich hierbei die bereits genannten Vorteile. Darüber hinaus ist der thermische Ausdehnungskoeffizient der PVC-Zusammensetzung weniger verschieden von einem thermischen Ausdehnungskoeffizienten des glasfaserverstärkten Duroplast-Harz, als dies bei bekannten Verbund-Rohren, welche beispielsweise Polypropylen umfassen, der Fall ist. Hierdurch werden hohe Scherkräfte bei häufigen und insbesondere abrupten Temperaturveränderungen minimiert, so dass die mechanische Belastung auf das Verbundrohr geringer ist.

Besonders bevorzugt wird ein Verbund-Rohr, das sich dadurch auszeichnet, dass die innere Wandung mit der Hülle durch mindestens einen Haftharz verbunden ist. Diese Art der Anbindung ist aufgrund der Eigenschaften der Polyvinylchlorid-Zusammensetzung möglich. Es kann demnach auf ein Glasvlies verzichtet werden, so dass sich die hiermit verbundenen Probleme nicht ergeben. Die Verwendung eines Haftharzes ermöglicht einen chemischen anstelle eines mechanischen Verbundes, was eine sehr hohe Reproduzierbarkeit eines erhöhten Qualitätsstandards in Hinblick auf eine Haftscherfestigkeit des Verbundes von GFK-Höhe und PVC-Inliner zur Folge hat. Im Übergangsbereich zwischen Hülle und innerer Wandung ergibt sich keine beschleunigt fortschreitende Korrosion, die sich insbesondere rasch entlang einer Längserstreckung des Rohres fortsetzen könnte. Daher sind Beschädigungen des Rohres, wenn sie überhaupt auftreten, lokal begrenzt, so dass nicht das komplette Rohrsystem ausfällt. Es ist möglich, beschädigte Rohre in eng umgrenzten lokalen Bereichen auszutauschen. Aufgrund der sehr guten Verarbeitbarkeit der PVC-Zusammensetzung und der diese umfassenden Verbund-Rohre ist es sogar möglich, beschädigte Rohrteile aus einem Rohr herauszuschneiden und durch neue, entsprechende Rohrteile zu ersetzen. Diese können einfach an den sich ergebenden Schnittstellen befestigt, vorzugsweise angeschweißt werden, ohne dass teure und aufwändige Temperschritte erforderlich werden.

Die Aufgabe wird auch gelöst, indem eine Verwendung einer PVC-Zusammensetzung gemäß Anspruch 7 angegeben wird. Die PVC-Zusammensetzung nach einer der zuvor beschriebenen Ausführungsformen wird erfindungsgemäß als chemikalien- und temperaturbeständiges Material zur Herstellung von Rohren, Rinnen, Behältern, Platten, Formteilen und/oder von Schweißdraht verwendet. Die so hergestellten Produkte sind kostengünstig, leicht zu verarbeiten und äußerst chemikalienbeständig.

Die Aufgabe wird auch gelöst, indem eine Verwendung einer PVC-Zusammensetzung gemäß Anspruch 8 angegeben wird. Die PVC-Zusammensetzung nach einer der zuvor beschriebenen Ausführungsformen wird als chemikalien- und temperaturbeständiges Material für ein Rohr, eine Rinne oder einen Behälter nach einem der Ansprüche 4 bis 6 verwendet. Besonders bevorzugt wird sie zur Herstellung einer sogenannten Liner-Verbundkomponente verwendet. Dies ist beispielsweise ein Verbund-Rohr, welches eine GFK-Hülle sowie einen thermoplastischen Inliner aufweist, welcher die PVC-Zusammensetzung nach einer der zuvor beschriebenen Ausführungsformen vorzugsweise als chemikalienbeständige innere Wandung umfasst. Es ergeben sich dabei die bereits beschriebenen Vorteile.

Schließlich wird die Aufgabe auch gelöst, indem eine Verwendung eines Rohres, einer Rinne oder eines Behälters gemäß Anspruch 9 angegeben wird. Das Produkt nach einer der zuvor beschriebenen Ausführungsformen wird zur Durchleitung und/oder Aufbewahrung eines chemisch aggressiven Stoffes verwendet, welcher mindestens eine Komponente umfasst, die ausgewählt ist aus einer Gruppe bestehend aus vorzugsweise wässriger Kalium- oder Natriumhydroxid-Lösung - mit vorzugsweise ≤ 50% KOH oder NaOH -, vorzugsweise wässriger Kaliumchlorid-Lösung - mit vorzugsweise ≤ 350g/L KCl -, vorzugsweise wässriger Natriumchlorid-Lösung - mit vorzugsweise ≤ 350g/L NaCl -, vorzugsweise wässriger Hypochlorit-Lösung - mit vorzugsweise ≤ 18 % Aktivchlor-Lösung -, und einer konzentrierten Mineralsäure. Die Mineralsäure umfasst vorzugsweise konzentrierte Schwefelsäure - mit vorzugsweise ≤ 120% SO₃ -, konzentrierte Salzsäure ≤ 37 %, konzentrierte Salpetersäure ≤ 68 % oder konzentrierte Flusssäure. Da die PVC-Zusammensetzung, welche das Produkt umfasst, sehr chemikalienbeständig sowohl gegenüber Säuren als auch gegenüber Laugen ist, kann dieses ohne Weiteres zur Durchleitung und/oder Aufbewahrung von aggressiven Reinstoffen oder Stoffgemischen, insbesondere der genannten Stoffe verwendet werden. Es ergeben sich dabei die bereits beschriebenen Vorteile.

Die Erfindung wird im Folgenden näher beschrieben, insbesondere werden auch bevorzugte Anwendungsbeispiele der PVC-Zusammensetzung näher beschrieben.

Dabei zeigen:

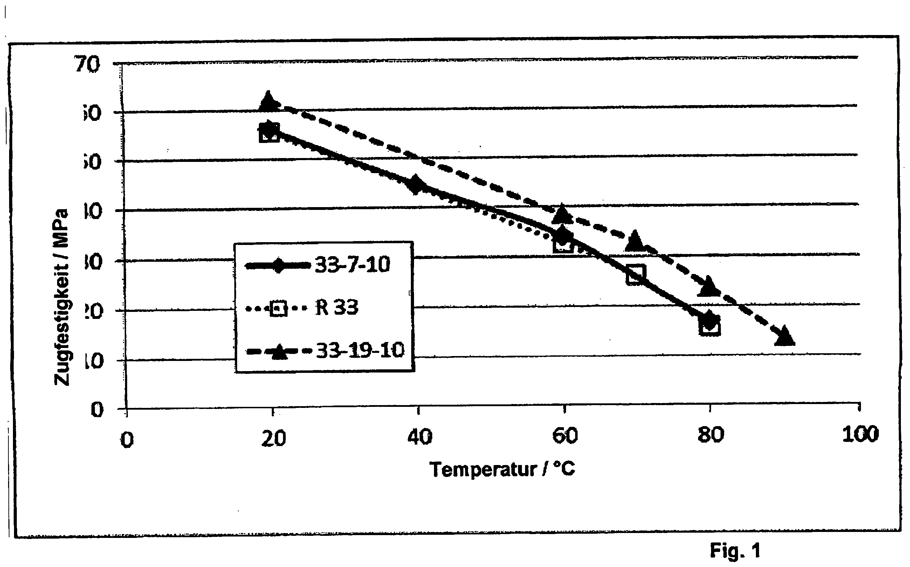

- Figur 1: eine diagrammatische Darstellung der Zugfestigkeit (DIN EN ISO 527) in MPa aufgetragen gegen die Temperatur in °C für drei verschiedene PVC-Zusammensetzungen. Dabei bezieht sich die mit der Bezeichnung R 33 versehene Kurve auf die PVC-Rezeptur PVC-U (troisdorfrot) der Georg Fischer DEKA GmbH. Die mit 33-7-10 gekennzeichnete Kurve bezieht sich auf eine im Vergleich zu PVC-U (troisdorfrot) leicht abgewandelte Prototyprezeptur der Georg Fischer DEKA GmbH. Die mit 33-19-10 gekennzeichnete Kurve bezieht sich auf das im Folgenden genannte, bevorzugte Ausführungsbeispiel der erfindungsgemäßen PVC-Zusammensetzung.

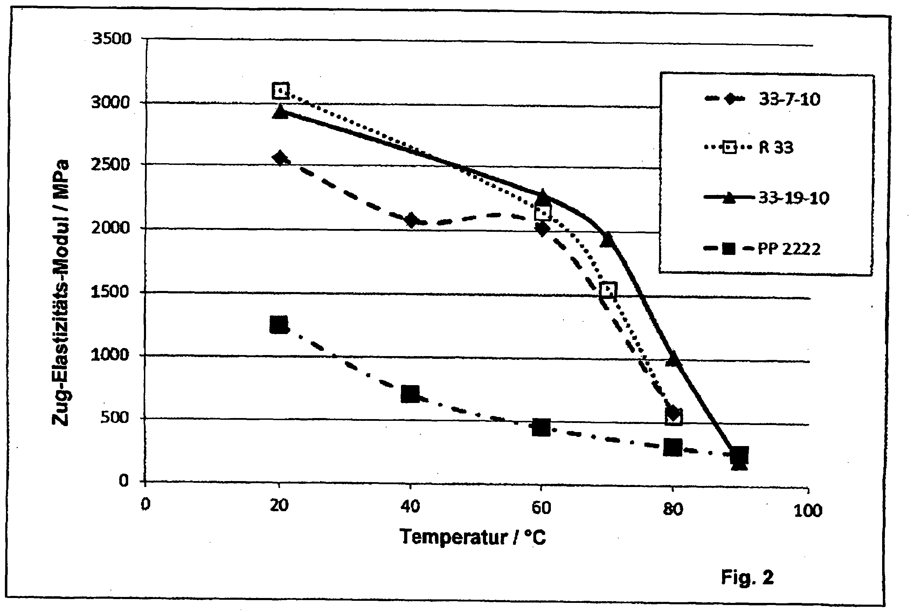

- Figur 2: ist eine diagrammatische Darstellung des Zug-Elastizitäts-Moduls (DIN EN ISO 527) in MPa aufgetragen gegen die Temperatur in °C für vier verschiedene Kunststoff-Zusammensetzungen. Dabei betrifft die mit PP 2222 gekennzeichnete Kurve eine Standard-Polypropylen-Zusammensetzung, die in der Chlorindustrie regelmäßig Verwendung findet. Für die übrigen Kurven wird auf die Angaben zu Figur 1 verwiesen.

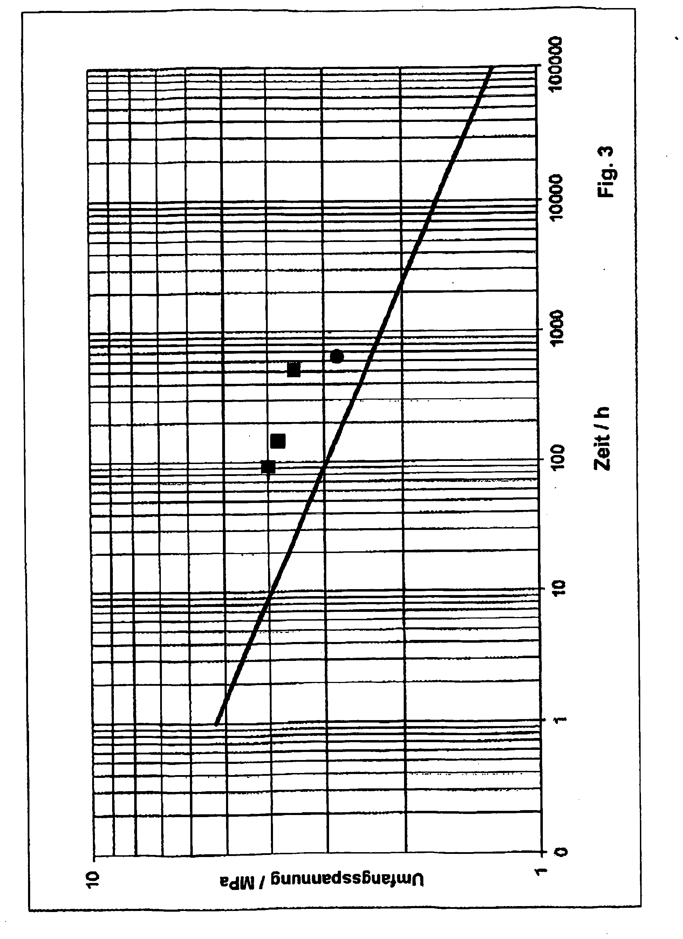

- Figur 3: zeigt eine diagrammatische Darstellung des Zeitstandsinnendruckverhaltens, nämlich der Umfangsspannung in MPa aufgetragen gegen die Zeit in Stunden in doppelt logarithmischer Darstellung, wobei die schwarze, durchgezogene Gerade das Normverhalten gemäß DIN 8061/62 für PVC-U bei 80 °C darstellt, während die einzelnen, quadratischen Punkte Messungen an der PVC-Zusammensetzung gemäß dem hier beschriebenen, bevorzugten Ausführungsbeispiel bei einer Temperatur von 90 °C darstellen. Der deutlich unter einer gedachten, durch die drei quadratischen Messpunkte verlaufenden Geraden liegende Messpunkt kennzeichnet einen Wert, bei welchem die Messung abgebrochen wurde.

Die PVC-Zusammensetzung wird bevorzugt hergestellt, indem verschiedene PVC-Rohharzkomponenten miteinander geliert beziehungsweise homogenisiert werden. Dabei weisen die verschiedenen Rohharzkomponenten verschiedene Molekulargewichte und Chlorgehalte auf. Besonders bevorzugt werden die verschiedenen Rohharzkomponenten so ausgewählt, dass sie ohne Zersetzung niedriger aufschmelzender Komponenten homogenisiert beziehungsweise geliert werden können, wobei letztlich eine monomodale Molekulargewichtsverteilung für das PVC-Harz der PVC-Zusammensetzung resultiert.

Vorzugsweise wird hierzu ein Geliermittel zugegeben, welches besonders bevorzugt ein Geliermittel auf Acrylatbasis umfasst.

Die letztlich resultierende PVC-Zusammensetzung übertrifft das für eine Temperatur von 80 °C geforderte Zeitstandsinnendruckverhalten gemäß DIN 8061/62 sogar bei einer Temperatur von 90 °C deutlich (Figur 3).

Vorzugsweise wird bei der Herstellung der PVC-Zusammensetzung auf eine Zugabe insbesondere von hydrolyse- und/oder oxidationsempfindlichen Gleitmitteln und/oder Verarbeitungshilfen verzichtet. Dies erhöht die chemische Beständigkeit der PVC-Zusammensetzung weiter. Werden Gleitmittel und/oder Verarbeitungshilfen zugegeben, wird vorzugsweise darauf geachtet, dass diese möglichst wenig hydrolyse- und/oder oxidationsempfindlich sind.

Vorzugsweise ist die PVC-Zusammensetzung frei von Calciumstearat, insbesondere frei von zugesetztem Calciumstearat. Ganz besonders bevorzugt ist sie vollständig frei von jeglichem Stearat, insbesondere von zugesetztem Stearat. Insbesondere dadurch, dass die PVC-Zusammensetzung in diesem Fall kein Calcium und auch keine Carboxylat-Gruppen umfasst, ist ihre Chemikalienbeständigkeit gegenüber bekannten Zusammensetzungen deutlich erhöht.

Die PVC-Zusammensetzung umfasst erfindungsgemäß eine erste PVC-Harzkomponente, welche aus unplastifiziertem PVC besteht. Besonders bevorzugt ist die erste PVC-Harzkomponente durch die CAS-Nummer 9002-86-2 gekennzeichnet.

Erfindungsgemäß umfasst die PVC-Zusammensetzung außerdem eine zweite Harzkomponente, welche ein Polymer mit einem im Vergleich zu der ersten Harzkomponente erhöhten Chlorgehalt ist. Erfindungsgemäß weist die zweite Harzkomponente eine Molekulargewichtsverteilung mit einem niedrigeren Zahlenmittel und einem niedrigeren Gewichtsmittel als die erste Harzkomponente auf. Erfindungsgemäß ist die zweite Harzkomponente eine PVC-Harzkomponente. Ganz besonders bevorzugt ist die zweite Harzkomponente durch die CAS-Nummer 68648-82-8 gekennzeichnet.

Es ist möglich, dass die PVC-Zusammensetzung mehr als zwei Harzkomponenten umfasst.

Die erste PVC-Harzkomponente weist erfindungsgemäß eine Molekulargewichtsverteilung mit einem Gewichtsmittel M_{W} von 140 kDa bis 154 kDa, vorzugsweise 141 kDa bis 153 kDa, vorzugsweise 142 kDa bis 152 kDa, vorzugsweise 143 kDa bis 151 kDa, vorzugsweise 144 kDa bis 150 kDa, vorzugsweise 145 kDa bis 149 kDa, auf. Das Zahlenmittel M_{N} der Molekulargewichtsverteilung der ersten PVC-Harzkomponente beträgt erfindungsgemäß 70 kDa bis 77 kDa, vorzugsweise 71 kDa bis 76 kDa. Der Chlorgehalt der ersten PVC-Harzkomponente beträgt bevorzugt 54 % bis 60 %, vorzugsweise 55 % bis 59 %, vorzugsweise 56 % bis 58 %.

Die zweite Harzkomponente weist erfindungsgemäß eine Molekulargewichtsverteilung auf mit einem Gewichtsmittel M_{W} von 101 kDa bis 113 kDa, vorzugsweise 102 kDa bis 112 kDa, vorzugsweise 103 kDa bis 111 kDa, vorzugsweise 104 kDa bis 110 kDa, vorzugsweise 105 kDa bis 109 kDa. Das Zahlenmittel M_{N} der Molekulargewichtsverteilung der zweiten PVC-Harzkomponente beträgt erfindungsgemäß 54 kDa bis 63 kDa, vorzugsweise 55 kDa bis 62 kDa, vorzugsweise 56 kDa bis 61 kDa, vorzugsweise 57 kDa bis 60 kDa. Der Chlorgehalt der zweiten Harzkomponente beträgt bevorzugt 62 % bis 69 %, vorzugsweise 63 % bis 68 %, vorzugsweise 64 % bis 67, vorzugsweise 65 % bis 66 %.

Die PVC-Zusammensetzung weist die erste Harzkomponente und die zweite Harzkomponente erfindungsgemäß in einem Verhältnis von 40:60 bis 60:40, vorzugsweise von 45:55 bis 55:45, vorzugsweise von 48:52 bis 52:48 auf.

Die PVC-Zusammensetzung umfasst weiterhin vorzugsweise einen Zinn-Stabilisator, vorzugsweise Mono-Oktyl-Zinn oder Di-Oktyl-Zinn oder einer Gemisch aus Mono- und Di-Oktyl-Zinn auf. Vorzugsweise umfasst der Zinn-Stabilisator eine Verbindung mit der CAS-Nummer 15571-58-1 oder eine Verbindung mit der CAS-Nummer 27107-89-7 oder ein Gemisch aus diesen Verbindungen. Die PVC-Zusammensetzung weist den Zinn-Stabilisator vorzugsweise mit einem Masseanteil von 0,1 phr bis 1 phr, vorzugsweise 0,3 phr bis 0,8 phr, vorzugsweise 0,4 phr bis 0,7 phr auf.

Die hier verwendete Einheit phr (parts per hundred rubber) bezeichnet Teile pro 100 Teilen Gesamtharz der Zusammensetzung.

Vorzugsweise umfasst die PVC-Zusammensetzung Titandioxid, besonders bevorzugt mit der CAS-Nummer 13463-67-7, mit einem Masseanteil von 0,05 phr bis 0,4 phr, vorzugsweise 0,09 phr bis 0,3 phr, vorzugsweise 0,1 phr bis 0,25 phr.

Weiterhin umfasst die PVC-Zusammensetzung vorzugsweise wenigstens ein Pigment und/oder wenigstens einen Farbstoff, besonders bevorzugt ausgewählt aus der Liste bestehend aus Verbindungen mit den CAS-Nummern 6536-46-2, 57455-37-5 und 15782-05-5. Insbesondere ist es möglich, mehrere Pigmente und/oder Farbstoffe je nach gewünschter Farbe der PVC-Zusammensetzung zu mischen. Der Pigment- beziehungsweise Farbstoffanteil an der PVC-Zusammensetzung beträgt bevorzugt 0,1 phr bis 1,0 phr, vorzugsweise 0,4 phr bis 0,8 phr, vorzugsweise 0,6 phr bis 0,7 phr auf.

Weiterhin umfasst die PVC-Zusammensetzung bevorzugt eine erste, oxidierte Polyethylen-Wachs-Komponente, vorzugsweise auf der Grundlage der CAS-Nummer 9002-88-4, vorzugsweise mit einem Tropfpunkt (Mettler Drop Point; ASTM D-3954) von 101 °C und einer Säurezahl (ASTM D-1386) von 15 mg KOH/g. Die erste, oxidierte Polyethylen-Wachs-Komponente liegt vorzugsweise mit einem Masseanteil von 0,5 phr bis 1,1 phr, vorzugsweise 0,6 phr bis 1 phr, vorzugsweise 0,65 phr bis 0,9 phr vor.

Bevorzugt umfasst die PVC-Zusammensetzung eine zweite, oxidierte Polyethylen-Wachs-Komponente, vorzugsweise ebenfalls auf der Grundlage der CAS-Nummer 9002-88-4, vorzugsweise mit einem Tropfpunkt (Mettler Drop Point; ASTM D-3954) von 140 °C und einer Säurezahl (ASTM D-1386) von 7 mg KOH/g. Die zweite Polyethylen-Wachs-Komponente unterscheidet sich von der ersten Polyethylen-Wachs-Komponente bevorzugt durch den Tropfpunkt und die Säurezahl. Vorzugsweise beträgt der Masseanteil der zweiten Polyethylen-Wachs-Komponente 0 phr bis 0,4 phr, vorzugsweise 0,05 phr bis 0,2 phr.

Bevorzugt umfasst die PVC-Zusammensetzung eine Fischer-Tropsch-Wachs-Komponente, vorzugsweise ein unfunktionalisiertes Fischer-Tropsch-Hartparaffin mit einem Tropfpunkt (DGF M-III 3) von 108 bis 114 °C und einer Säurezahl (DGF M-IV 2) von < 1 mg KOH/g. Vorzugsweise beträgt der Masseanteil Fischer-Tropsch-Wachs-Komponente 0,3 phr bis 0,7 phr, vorzugsweise 0,4 phr bis 0,6 phr.

Wesentlich bei der Zusammenstellung der oxidierten Polyethylen-Wachs-Komponenten und der Fischer-Tropsch-Wachs-Komponente ist, dass möglichst keine zusätzlichen funktionellen Gruppen in die PVC-Zusammensetzung eingebracht werden, die sich nachteilig auf deren chemische Stabilität auswirken könnten. Ebenso ist wesentlich, dass auf übliche Additive, welche Calcium umfassen, beispielsweise Calcium-Stearat, verzichtet wird. Insgesamt ist vorgesehen, keine chemisch labilen Funktionalitäten in die Zusammensetzung zu integrieren.

Letztlich werden die genauen Anteile und Beschaffenheiten der oxidierten Polyethylen-Wachs-Komponenten und Fischer-Tropsch-Wachs-Komponenten vorzugsweise auf die konkret zur Verfügung stehenden Maschinen zur Herstellung der PVC-Zusammensetzung und auf die Verarbeitungsbedingungen abgestimmt.

Weiterhin umfasst die PVC-Zusammensetzung bevorzugt mindestens eine Acrylat-basierende Gelier- und/oder Verarbeitungshilfe, besonders bevorzugt mit der CAS-Nummer 27136-15-8. Die Gelier- und/oder Verarbeitungshilfe weist bevorzugt einen Masseanteil von 0,8 phr bis 1,2 phr, vorzugsweise 0,9 phr bis 1,1 phr, vorzugsweise 0,95 phr bis 1,05 phr, vorzugsweise 0,97 phr bis 1,03 phr auf.

Weiterhin umfasst die PVC-Zusammensetzung vorzugsweise mindestens ein Antioxidans, besonders bevorzugt mit der CAS-Nummer 6683-19-8. Das Antioxidans weist bevorzugt einen Masseanteil von 0,5 phr bis 1,4 phr, vorzugsweise 0,8 phr bis 1,2 phr, vorzugsweise 0,9 bis 1,1 phr auf.

Vorzugsweise ist die PVC-Zusammensetzung abgesehen von der ersten und/oder der zweiten Polyethylen-Wachs-Komponente frei von Fließhilfen, insbesondere von zugesetzten Fließhilfen.

Ein bevorzugtes Ausführungsbeispiel der PVC-Zusammensetzung umfasst eine erste PVC-Harzkomponente mit der CAS-Nummer 9002-86-2 zu 48 Teilen. Es umfasst eine zweite PVC-Harzkomponente mit der CAS-Nummer 68648-82-8 zu 52 Teilen. Der Anteil der PVC-Harzkomponenten addiert sich in diesem Fall zu 100. Damit sind alle hier genannten von Teile letztlich bezogen auf 100 Teile Gesamtharz, also in phr angegeben. Das Ausführungsbeispiel umfasst weiter einen Zinn-Stabilisator zu 0,5. Teilen, welcher Bestandteile mit den CAS-Nummern 15571-58-1 und 27107-89-7 umfasst. Es umfasst weiterhin Titandioxid mit der CAS-Nummer 13463-67-7 zu 0,1 Teilen. Es ist eine Pigment- und/oder Farbkomponente, umfassend mindestens eine Verbindung mit einer CAS-Nummer ausgewählt aus der Liste bestehend aus 6536-46-2, 57455-37-5 und 15782-05-5, zu 0,65 Teilen umfasst. Eine erste oxidierte Polyethylen-Wachs-Komponente mit einem Tropfpunkt (Mettler Drop Point; ASTM D-3954) von 101 °C und einer Säurezahl (ASTM D-1386) von 15 mg KOH/g ist zu 0,9 Teilen umfasst, eine zweite oxidierte Polyethylen-Wachs-Komponente mit einem Tropfpunkt (Mettler Drop Point; ASTM D-3954) von 140 °C und einer Säurezahl (ASTM D-1386) von 7 mg KOH/g ist zu 0,1 Teilen umfasst. Der Gesamtanteil der oxidierten Polyethylen-Wachs-Komponenten beläuft sich damit auf 1,0 Teile. Es ist eine Fischer-Tropsch-Wachs-Komponente mit einem Tropfpunkt (DGF M-III 3) von 108 bis 114 °C und einer Säurezahl (DGF M-IV 2) von < 1 mg KOH/g zu 0,4 Teilen umfasst. Weiterhin ist eine Acrylat-basierende Gelier- und/oder Verarbeitungshilfe mit der CAS-Nummer 27136-15-8 zu einem Teil umfasst. Es ist ein Antioxidans mit der CAS-Nummer 6683-19-8 zu einem Teil umfasst. Damit addiert sich die Summe der Teile bei diesem Ausführungsbeispiel zu insgesamt 104,65.

Die verschiedenen Komponenten der PVC-Zusammensetzung werden in fachüblicher Weise gemischt, geliert beziehungsweise verarbeitet und anschließend vorzugsweise extrudiert.

Im Folgenden werden die Eigenschaften der erfindungsgemäßen PVC-Zusammensetzung gemäß dem bevorzugten Ausführungsbeispiel anhand experimenteller Daten näher belegt. Dabei bezeichnet DEKADUR Plus eine PVC-Zusammensetzung gemäß dem bevorzugten Ausführungsbeispiel.

Figur 1 zeigt die Zugfestigkeit gemäß DIN EN ISO 527 verschiedener PVC-Zusammensetzungen aufgetragen gegen die Temperatur. Dabei zeigt sich, dass die mit 33-19-10 gekennzeichnete Kurve, welche DEKADUR Plus betrifft, stets oberhalb der beiden anderen Kurven liegt. Insbesondere ist die Zugfestigkeit von DEKADUR Plus in dem Temperaturbereich oberhalb von 60 °C deutlich im Vergleich zu den beiden anderen Materialien erhöht. Die mit R 33 gekennzeichnete Kurve betrifft dabei die Rezeptur PVC-U (troisdorfrot) der Georg Fischer DEKA GmbH, und die mit 33-7-10 gekennzeichnete Kurve betrifft eine leicht abgewandelte Prototyprezeptur auf Basis von PVC-U (troisdorfrot) der Georg Fischer DEKA GmbH. Beide Vergleichsrezepturen weisen einen Kreide-Anteil von < 3 % auf.

Figur 2 zeigt das Zug-Elastizitäts-Modul gemäß DIN EN ISO 527 verschiedener Zusammensetzungen aufgetragen gegen die Temperatur. Auch hier zeigt sich, dass DEKADUR Plus insbesondere in dem Temperaturbereich > 60 °C ein höheres Elastizitätsmodul aufweist als die Vergleichsrezepturen. Dabei betrifft die mit PP 2222 gekennzeichnete Kurve eine in der Chlorindustrie insbesondere für den Katholyt-Kreislauf häufig verwendete Standard-Polypropylen-Rezeptur. Bezüglich der Bezeichnung der übrigen Kurven und der Zusammensetzungen, welche diese betreffen, wird auf die Angaben zu Figur 1 verwiesen.

Figur 3 zeigt das Zeitstandsinnendruckverhalten, nämlich die Umfangsspannung von DEKADUR Plus aufgetragen gegen die Zeit (quadratische Messpunkte) im Vergleich zu der als durchgezogene Gerade dargestellten 80 °C-DIN-Kurve für PVC-U gemäß DIN 8061/62. Dabei wurden die Messwerte für DEKADUR Plus bei einer Temperatur von 90 °C gemessen. Der als Kreis dargestellte Messpunkt kennzeichnet eine Messung, die abgebrochen wurde, weil bei der vorgegebenen Umfangsspannung eine Messzeit von einigen Jahrzehnten resultieren würde. Gleichwohl zeigt sich, dass auch dieser Messpunkt klar über der Normkurve liegt. Das experimentell für DEKADUR Plus ermittelte Verhalten bei einer Temperatur von 90 °C wird auch durch Extrapolation mit Drucksteigerungstests gemäß der Minerschen Regel bestätigt. Aus Figur 3 geht klar hervor, dass Rohre, welche DEKADUR Plus umfassen, bei einer Temperatur von 90 °C druckbeständiger sind als es die Norm DIN 8061/62 für eine Temperatur von 80 °C fordert.

Das chemische Beständigkeitsverhalten von DEKADUR Plus wird anhand der aus den folgenden Tabellen hervorgehenden experimentellen Daten bestätigt. Um die chemische Beständigkeit zu ermitteln, wurden Immersionsversuche mit Medienkontakt von allen Seiten der verwendeten Proben vorgenommen. Als Probenmaterial dienten extrudierte Rohre mit einem Außendurchmesser von 63 mm und einer Wandstärke von 4,7 mm.

Dabei bezeichnet PVC-U 1 die Rezeptur PVC-U (troisdorfrot) der Georg Fischer DEKA GmbH, welche einen Blei-Stabilisator umfasst.

PVC-U 2 bezeichnet eine Prototyp-Rezeptur der Georg Fischer DEKA GmbH auf der Basis von PVC-U (troisdorfrot), wobei statt des Blei-Stabilisators ein Zinn-Stabilisator umfasst ist.

Beide Rezepturen PVC-U 1 und PVC-U 2 umfassen einen Kreideanteil von weniger als 3 %. Andere Standard-PVC-U-Rezepturen weisen einen Kreideanteil von ungefähr 6 % auf. Insoweit sind die Rezepturen PVC-U 1 und PVC-U 2 in Hinblick auf ihre Chemikalienresistenz bereits gegenüber anderen Standard-Rezepturen verbessert.

Mit PVC-C ist in Zusammenhang mit den folgenden Tabellen die Rezeptur DEKADUR C der Georg Fischer DEKA GmbH auf der Basis des Rohstoffs Temprite 88708 bezeichnet.

**Tabelle 1**

| Rezeptur | Gewichtsänderung / % | Eindringtiefe / µm (innen/aussen) | Änderung Vicat / K | Blasenbildung/Verformung |
|---|---|---|---|---|
| PVC-U 1 | 11,1 | 610/520 | 4,4 | ja |
| DEKADUR Plus | 7,8 | 550/480 | 0,9 | nein |

Die in Tabelle 1 zusammengefassten Vergleichswerte von PVC-U 1 und DEKADUR Plus wurden erhalten bei einem drei Monate dauernden Feldversuch, bei welchem die Proben feuchtem Chlorgas mit 98,5 % bis 99,7 % Chlor, Wasserdampf-Sättigung, Sauerstoff als Restgas, bei einer Temperatur von 85 °C bis 90 °C ausgesetzt wurden. Der Begriff "Feldversuch" spricht an, dass die Proben feuchtem Chlorgas im Realbetrieb einer Industrieanlage ausgesetzt wurden. Die Werte aus Tabelle 1 zeigen klar, dass DEKADUR Plus im Vergleich zu PVC-U 1 unter den angegebenen Versuchsbedingungen eine geringere Gewichtsänderung, eine deutlich geringere Veränderung der Vicat-Erweichungstemperatur, eine geringere Eindringtiefe sowohl innen als auch außen, sowie keine Blasenbildung zeigt. Damit ist DEKADUR Plus eindeutig resistenter gegenüber Chlorierung und Diffusionserscheinungen unter den angegebenen Versuchbedingungen.

**Tabelle 2**

| Rezeptur | Gewichtsänderung / % | Eindringtiefe / µm (innen/aussen) |
|---|---|---|
| PVC-U 1 | -1,00 | 490 / 510 |
| PVC-U mit 7 phr Schlagzäh-Modifier auf Acrylatbasis | -0,80 | 630 / 770 |
| PVC-U mit Stabilisator und Antioxidanspaket vonDEKADUR Plus | 0,80 | 450 / 510 |

Tabelle 2 zeigt einen Versuch, bei welchem die Proben in einem Feldversuch sieben Monate in einem Bypass einer Bleichanlage einer Papiermühle Chlordioxid mit 1 % ClO₂ mit einem Feststoff-Anteil (Pulp-Anteil - im Wesentlichen Holzanteile) von 5 % bei einer Temperatur von 68 °C bis 75 °C ausgesetzt wurden. Die Rezeptur, welche mit "PVC-U mit 7 phr Schlagzäh-Modifier auf Acrylat-Basis" angeben ist, basiert auf einer Standard PVC-U-Rezeptur, der zusätzlich 7 phr Schlagzäh-Modifizierer auf Acrylat-Basis zugesetzt wurde. Die Rezepturen PVC-U 1 und PVC-U 2 sind dagegen frei von Schlagzäh-Modifizierern. Die mit "PVC-U mit Stabilisator und Antioxidanspaket von DEKADUR Plus" gekennzeichnete Rezeptur ist eine Standard-PVC-U-Rezeptur, der Stabilisator- und Antioxidans-Komponenten wie bei DEKADUR Plus zugesetzt wurden. Die Versuche, auf welche sich Tabelle 2 bezieht, wurden durchgeführt, um den Einfluss eines Schlagzäh-Modifizierers auf die chemische Beständigkeit einer PVC-U-Rezeptur darzustellen, sowie um die klare Überlegenheit der für die Rezeptur DEKADUR Plus ausgewählten Stabilisatoren und Antioxidantien zu demonstrieren. Dabei zeigen die in Tabelle 2 angegebenen Werte deutlich den negativen Einfluss des Schlagzäh-Modifizierers, insbesondere auf die Eindringtiefe. Demgegenüber weist die Rezeptur mit den Stabilisatoren und Antioxidantien von DEKADUR Plus deutlich verbesserte Eigenschaften auf.

**Tabelle 3**

| Rezeptur | Gewichtsänderung / % | Eindringtiefe / µm (innen) |
|---|---|---|
| PVC-U 1 | 0,45 | 258 |
| PVC-U 2 | 0,78 | 460 |
| DEKADUR Plus | 0,30 | 183 |

Tabelle 3 betrifft die chemische Beständigkeit verschiedener Proben gegenüber Salpetersäure. Die Proben wurden Salpetersäure mit 55 % HNO₃ bei einer Temperatur von 60 °C für eine Dauer von acht Wochen ausgesetzt. Die in Tabelle 3 angegebenen Werte zeigen klar die deutlichen Vorteile in der Chemikalienresistenz von DEKADUR Plus im Vergleich zu PVC-U 1 und PVC-U 2 gegenüber oxidierenden Mineralsäuren wie konzentrierter Salpetersäure.

**Tabelle 4**

| Rezeptur | Gewichtsänderung / % | Eindringtiefe Schwarzfärbung durch SO₃ |
|---|---|---|
| PVC-U 1 | 0,19 | gesamtes Probevolumen durchsetzt |
| DEKADUR Plus | 0,57 | nur Oberfläche |

Tabelle 4 betrifft die chemische Beständigkeit von DEKADUR Plus im Vergleich zu PVC-U 1 gegenüber konzentrierter Schwefelsäure, wobei die Proben für eine Dauer von drei Wochen konzentrierter Schwefelsäure (96 %) bei einer Temperatur von 90 °C ausgesetzt wurden. Dabei zeigt sich anhand der Werte in Tabelle 4 klar das völlig andere und verbesserte Korrosionsverhalten von DEKADUR Plus. Insbesondere ist die Diffusion von SO₃ bei DEKADUR Plus deutlich verzögert.

**Tabelle 5**

| Rezeptur | Gewichtsänderung / % | Eindringtiefe Schwarzfärbung durch SO₃ |
|---|---|---|
| PVC-U 1 | 1,38 | starkes Eindiffundieren mit Schwarzfärbung |
| DEKADUR Plus | 1,22 | nur Oberfläche |
| DEKADUR Plus 4h/95°C getempert | 0,98 | nur Oberfläche |

Tabelle 5 betrifft die chemische Beständigkeit von zwei DEKADUR Plus-Proben im Vergleich zu PVC-U 1 gegenüber Schwefeltrioxid. Die zweite DEKADUR Plus-Probe unterscheidet sich von der ersten dadurch, dass sie bei 95 °C vier Stunden getempert wurde. Die Proben wurden einer gesättigten SO₃-Atomsphäre in der Gasphase über 20 % Oleum bei 20 °C für zwei Wochen ausgesetzt. Dabei zeigen die Werte von Tabelle 5, dass das Korrosionsverhalten von DEKADUR Plus bei beiden Proben deutlich anders und gegenüber PVC-U 1 verbessert ist. Insbesondere ist die Diffusion von SO₃ bei DEKADUR Plus deutlich verzögert. Ein Tempern der DEKADUR Plus-Probe erhöht weiter deren Beständigkeit.

**Tabelle 6**

| | DEKADUR Plus | | PVC-U 2 | PVC-U 1 | PVC-C | Standard |
|---|---|---|---|---|---|---|
| Einlagerungszeit /Wochen | 3 | 12 | 8 | 8 | 3 | |
| Delta Masse/ % | 0,097 | 0,127 | 0,141 | -0,027 | 0,208 | gravimetrisch |
| Delta Farbe | keine | leicht verdunkelt | leicht verdunkelt | sehr deutliche Braunfärbung | Beigefärbung | visuell |
| | nicht feststellbar | | | | | |
| Eindringtiefe | | | | | | mikroskopisch (visuell, XRF, Indikator) |
| Delta Vicat/K | 5,4 | 6 | 3,1 | n.b. | 1,3 | ISO 306 |
| Delta E-Modul/% | 14,6 | 14,7 | 2 | 3,9 | -7,6 | |
| Delta Zugfestigkeit/% | 8,1 | 11,3 | 15,9 | 21,4 | 8,9 | |
| Delta Reissdehnung/% | -23,4 | -19,9 | -32,9 | -56,8 | -13,1 | DIN EN ISO 527 |

Tabelle 6 betrifft Eigenschaftsänderungen verschiedener in der Tabelle genannter Materialproben gegenüber konzentrierter Natronlauge (32 %) bei einer Temperatur von 95 °C, im Vergleich zu den Daten einer Nullprobe, also einer frisch hergestellten, nicht der Chemikalie ausgesetzten Probe. Es sind verschiedene Eigenschaftsänderungen in Abhängigkeit von einer Einlagerungszeit in Wochen für die verschiedenen Proben in der Lauge angegeben. Dies sind die Masseänderung, eine Änderung in der Farbe, die Eindringtiefe, die Änderung der Vicat-Erweichungstemperatur, die Änderung des Elastizitätsmoduls, die Änderung der Zugfestigkeit und die Änderung der Reißdehnung. Dabei zeigt sich anhand der in Tabelle 6 angegebenen Werte, dass die für PVC-Zusammensetzungen bekannte Verhärtung beziehungsweise Eigenschaftsänderung, unter anderem der Sinter-Effekt, bei DEKADUR Plus schon im Verlauf der ersten drei Wochen erfolgt, wonach keine signifikante Änderung mehr eintritt. Ein Angriff der Lauge erfolgt dabei nur marginal an der Oberfläche. Damit ist die Korrosionsbeständigkeit von DEKADUR Plus im Vergleich zu PVC-U 1, PVC-U 2 und insbesondere zu PVC-C auch bei hoher Temperatur belegt. Ganz besonders zeigt sich, dass sich DEKADUR Plus viel stabiler gegenüber Natronlauge verhält als PVC-C, bei welchem insbesondere der zugesetzte Schlagzäh-Modifizierer für die schlechte Beständigkeit verantwortlich ist.

**Tabelle 7**

| Rezeptur | Gewichtsänderung / % | Gewichtsänderung / % | Eindringtiefe / µm (innen) | Eindringtiefe / µm (innen) |
|---|---|---|---|---|
| Einlagerungszeit/Wochen | 3 | 8 | 3 | 8 |
| PVC-U 1 | 0,71 | n.b. | 494 | n.b. |
| PVC-U 2 | 1,08 | 1,37 | 603 | 906 |
| DEKADUR Plus | 0,33 | 0,53 | 868 | 1215 |

Tabelle 7 betrifft einen Versuch, bei welchem die Proben jeweils drei beziehungsweise acht Wochen konzentrierter Salzsäure (35 %) bei 60 °C ausgesetzt wurden. Angegeben sind für die jeweilige Einlagerungszeit die Gewichtsänderung und die Eindringtiefe (innen). Auch hierbei zeigt sich, dass DEKADUR Plus im Vergleich zu PVC-U 1 und PVC-U 2 verbesserte Eigenschaften aufweist. Insbesondere zeigt DEKADUR Plus eine deutlich geringere Aufnahme der Salzsäure. Diese Eigenschaft hat große Vorteile bei der Verwendung von Rohren, welche DEKADUR Plus umfassen, als Liner. Die geringere Aufnahme/Sorption aufgrund geringerer Reaktion mit Salzsäure ist verbunden mit einer beschleunigten Diffusion, so dass die Eindringtiefe bei DEKADUR Plus erhöht ist.

**Tabelle 8**

| Rezeptur | Gewichtsänderung / % | Eindringtiefe / µm (innen) |
|---|---|---|
| DEKADUR Plus | 0,51 | 1126 |
| PVC-U 1 | 0,27 | 1239 |
| PVC-U 2 | 0,24 | 1150 |
| PVC-C | 3,21 | 588 |

Schließlich betrifft Tabelle 8 einen Versuch, bei welchem die Proben konzentrierter Flusssäure (40 %) bei 40 °C für drei Wochen ausgesetzt wurden. Dabei zeigen die Werte aus Tabelle 8, dass PVC-C Flusssäure in sehr hohem Maße durch Reaktion mit Rezepturbestandteilen aufnimmt. Dadurch ergibt sich eine verzögerte Diffusion, also eine geringere Eindringtiefe. DEKADUR Plus zeigt einen sehr guten Kompromiss im Verhalten gegenüber Flusssäure und anderen Säuren, wobei das Permeationsverhalten von DEKADUR Plus im Wesentlichen dem von PVC-U entspricht und sich damit deutlich insbesondere gegenüber PVC-C abgrenzt.

In Hinblick auf die PVC-Zusammensetzung und auf Komponenten, welche diese umfassen, zeigt sich weiter Folgendes:
Eine thermische Spannungsrelaxation, beispielsweise beim Schweißen oder Verlegen von Komponenten, welche die PVC-Zusammensetzung umfassen, erfolgt bei einer Temperatur von 95 °C bereits innerhalb von 1 bis 2 Stunden. Dies ermöglicht eine kostengünstige Temperung einer gesamten Rohrisometrie nach Installation derselben durch Durchleitung von Heißwasser. Damit entfallen extrem teure Temperschritte mit Hilfe externer Heizbänder. Es ist auch möglich, insbesondere in der Chlorindustrie oder bei anderen Anwendungsfeldern, bei denen heiße Medien mit der PVC-Zusammensetzung in Kontakt kommen, eine Temperung der Komponenten im Betrieb direkt beim Anfahren einer Anlage durchzuführen.

Die PVC-Zusammensetzung beziehungsweise Komponenten, welche diese umfassen, wie beispielsweise Rohre, Rinnen und/oder Behälter, sind bevorzugt insbesondere in folgenden Bereichen anwendbar:
Aufgrund ihrer hohen chemischen und Temperaturstabilität sind sie für den Kontakt mit Reinst-Solen, beispielsweise ultrareiner Natriumchlorid- oder Kaliumchlorid-Lösung geeignet, insbesondere in einem Temperaturbereich von ungefähr 50 °C bis ungefähr 80 °C sowie gegebenenfalls mit Chlorbelastung der Lösungen und wechselnden pH-Werten. Im Vergleich zu der erfindungsgemäßen PVC-Zusammensetzung ist die in diesem Bereich mögliche Verwendung von PVC-C infolge des höheren Rohstoffpreises und einer deutlich schwierigeren Verarbeitung sehr viel teurer. Verbundsysteme aus PP-Inliner und GFK-Hülle versagen oft innerhalb weniger Monate durch die hohe Chlorbelastung aufgrund von Versprödung und/oder Korrosion.

Der Katholyt-Kreislauf in einer Chlorelektrolyse-Anlage ist ebenfalls ein geeignetes Einsatzgebiet für die PVC-Zusammensetzung beziehungsweise Komponenten, welche diese umfassen. Hier fällt typischerweise ungefähr 30 %-ige bis ungefähr 50 %-ige Kalium- oder Natriumhydroxidlösung bei einer Temperatur von ungefähr 85 °C bis ungefähr 92 °C an. Eine Verwendung von Standard-PVC-U scheidet aus thermischen Gründen aus. Auch PVC-C ist kein geeignetes Material wegen seiner Laugenlabilität. In Zusammenhang mit Verbundmaterialien aus PP/GFK ergeben sich die bereits genannten Nachteile. Die PVC-Zusammensetzung und Produkte, welche diese umfassen, bieten dagegen den Vorteil einer kostengünstigen Herstellung, leichten Verarbeitbarkeit und optimalen Chemikalien- sowie Temperaturbeständigkeit.

Auch in einem Anolyt-Kreislauf im Bereich der Chlorelektrolyse ist es möglich, die PVC-Zusammensetzung beziehungsweise ein Produkt, welches diese umfasst, einzusetzen. Hier fällt neben elementarem Chlor - in Abhängigkeit von der Prozessführung, insbesondere von dem pH-Wert - typischerweise hypochlorige Säure beziehungsweise in nachgeschalteten Prozessen eine Natrium-Hypochloritlösung an.

Insbesondere bietet sich auch ein Einsatz in der Natriumhypochlorit-Herstellung, beispielsweise in Chlorvernichtern von Chloranlagen, sowie weitere Anwendungen in Zusammenhang mit Natriumhypochlorit, vorzugsweise bei einer Temperatur von ≤ 60 °C an. Natriumhypochlorit wird in der Regel basisch stabilisiert. Es wird häufig durch die Einleitung von Chlorgas in eine Natriumhydoxidlösung erzeugt. Daher ist es kaum möglich, auf Materialien zurückzugreifen, welche PVC-C umfassen, weil dieses wegen seiner bereits beschriebenen Basen-Labilität ausscheidet. Die insbesondere bei Chlorvernichter-Einheiten entstehenden Maximaltemperaturen sind für Materialien inakzeptabel, welche Standard-PVC-U umfassen. Polyolefine sind bei den in diesem Bereich vorliegenden Bedingungen nicht beständig. Auch hier bietet demnach die Polyvinylchlorid-Zusammensetzung beziehungsweise ein Produkt, welches diese umfasst, eine kostengünstige Lösung für ein Anwendungsfeld, welches hohe Anforderungen an die verwendeten Materialien stellt.

Es ist auch möglich, die PVC-Zusammensetzung beziehungsweise ein Produkt, welches diese umfasst, zur Herstellung von Sauerstoffzufuhrleitungen zu verwenden, wo ein schwer entflammbares Verhalten eines thermoplastischen Inliners gefordert ist. So können beispielsweise teure Rohre ersetzt oder vermieden werden, welche Polyvinyliden-fluorid (PVDF) als Inlinermaterial und eine GFK-Hülle umfassen.

Schließlich ist es auch möglich die Polyvinylchlorid-Zusammensetzung zur Herstellung von Leitungen, Rohren, Rinnen und/oder Behältern für konzentrierte Schwefelsäure von > 90 %, insbesondere auch bei höherer und ganz besonders bei schwankender Temperatur einzusetzen. Hierdurch können beispielsweise Materialien ersetzt oder vermieden werden, welche teures Ethylen-Chlortrifluorethylen und/oder vollfluorierte Kunststoffe umfassen.

Auch eine Verwendung zur Herstellung von Leitungen, Rohren, Rinnen und/oder Behältern für konzentrierte Salpetersäure oder Zusammensetzungen, welche Salpetersäure und/oder Flusssäure umfassen beziehungsweise konzentrierte Salzsäure-Lösungen sind möglich. Dies ist insbesondere möglich bei einer Temperatur > 60 °C. Dabei können beispielsweise in der Stahlbeizindustrie dickwandige Polypropylen-Leitungen ersetzt werden, die üblicherweise einem hohen Verschleiß unterliegen. PVC-U ist in diesem Bereich aus thermischen Gründen nicht anwendbar. Polyvinylidenfluorid scheidet in der Regel aus Kostengründen aus, wobei auch PVC-C aus Kostengründen zumindest grenzwertig erscheint. Insgesamt ergibt sich also durch die Verwendung der Polyvinylchlorid-Zusammensetzung ein Kostenvorteil durch günstigere Herstellung, günstigere Verarbeitung und geringerem Verschleiß.

Die Polyvinylchlorid-Zusammensetzung ist auch bei für konventionelles PVC-U nicht mehr realisierbaren hohen Anwendungstemperaturen besonders resistent gegenüber Säuren, Anolyt in der Chlorelektrolyse, feuchtem Chlor, Hypochlorit, Salzsole, Laugen und/oder konzentrierter Schwefelsäure.

Rezepturanforderungen zur Sicherstellung einer guten Verarbeitung, Thermoformung und/oder Schweißung, einer Kompatibilität mit konventionellem PVC-U, die Erfüllung der Qualitätsanforderungen gemäß DIN 8061/62 für Rohre, sowie der Erweiterung der Einsatztemperatur auf bis zu 90 °C sind optimal mit den Anforderungen an die Rezepturbestandteile zur Sicherstellung einer bestmöglichen Chemikalienresistenz im oben genannten Bereich ausbalanciert.

Durch die äußerst vielfältigen Einsatzmöglichkeiten, welche sich im Zusammenhang mit der PVC-Zusammensetzung ergeben, kann die bisher übliche Materialvielfalt in den verschiedenen Anwendungsbereichen, insbesondere im Bereich von GFK-Verbundbauteilen und ganz besonders im Chlorbereich deutlich reduziert werden. Ein erheblicher Teil der auftretenden Anforderungen kann durch die hier vorgeschlagene PVC-Zusammensetzung erfüllt werden. Sie ist daher universal einsetzbar und ersetzt insbesondere teure, aufwändig zu verarbeitende und unbeständige beziehungsweise sehr anfällige Materialien.

Durch ihre geringe thermische Ausdehnung im Vergleich zu Polyolefin-Zusammensetzungen ist die PVC-Zusammensetzung unempfindlicher gegenüber Temperaturschwankungen.

Insgesamt zeigt sich, dass die PVC-Zusammensetzung, sie umfassende Produkte sowie die vielfältigen, verschiedenen Verwendungen derselben dazu beitragen, insbesondere in der Chlorindustrie und dort ganz besonders im Rohrleitungsbereich Kosten zu reduzieren und Ausfälle zu vermeiden.

## Patentansprüche

1. Polyvinylchlorid (PVC)-Zusammensetzung, zur Herstellung von Rohren, Rinnen, Behältern, Platten, Formteilen und/oder Schweißdraht, wobei
- ein PVC-Harz der Zusammensetzung, welche eine erste und eine zweite Harzkomponente umfasst, eine Molekulargewichtsverteilung mit einem Zahlenmittel von M_{N} = 60 kDa bis M_{N} = 70 kDa und einem Gewichtsmittel von M_{W} = 114 kDa bis M_{W} = 124 kDa aufweist, wobei die Gesamtzusammensetzung einen Chlorgehalt von 56 % bis 62 % aufweist, und wobei
- die erste Harzkomponente unplastifiziertes PVC ist und eine Molekulargewichtsverteilung mit einem Gewichtsmittel M_{W} von 140 kDa bis 154 kDa und einem Zahlenmittel M_{N} von 70 kDa bis 77 kDa aufweist,
- die zweite Harzkomponente eine PVC-Harzkomponente mit einem im Vergleich zur ersten Harzkomponente erhöhten Chlorgehalt ist und eine Molekulargewichtsverteilung mit einem Gewichtsmittel M_{W} von 101 kDa bis 113 kDa und einem Zahlenmittel M_{N} von 54 kDa bis 63 kDa aufweist,
- die PVC-Zusammensetzung die erste Harzkomponente und die zweite Harzkomponente in einem Verhältnis von 40:60 bis 60:40 aufweist,
- die PVC-Zusammensetzung eine Vicat-Erweichungstemperatur von größer 90°C aufweist und
- die PVC-Zusammensetzung frei von Schlagzäh-Modifizierern ist.

2. PVC-Zusammensetzung nach Anspruch 1, **dadurch gekennzeichnet, dass** die Zusammensetzung frei ist von Kreide und/oder Calcium und/oder Magnesium.

3. PVC-Zusammensetzung nach einem der vorherigen Ansprüche, **dadurch gekennzeichnet, dass** die Zusammensetzung Zinn und/oder eine Komponente umfasst, welche Zinn aufweist.

4. Rohr, Rinne oder Behälter zur Durchleitung und/oder Aufbewahrung von chemisch aggressiven Stoffen, **dadurch gekennzeichnet, dass** das Rohr, die Rinne oder der Behälter eine PVC-Zusammensetzung nach einem der Ansprüche 1 bis 3 umfasst.

5. Rohr nach Anspruch 4, **dadurch gekennzeichnet, dass** das Rohr als Verbund-Rohr ausgebildet ist, welches eine Hülle aufweist, die glasfaserverstärktes Duroplast-Harz umfasst, wobei das Rohr eine innere Wandung aufweist, welche eine PVC-Zusammensetzung nach einem der Ansprüche 1 bis 3 umfasst.

6. Rohr nach Anspruch 5, **dadurch gekennzeichnet, dass** die innere Wandung mit der Hülle durch mindestens ein Haftharz verbunden ist.

7. Verwendung einer PVC-Zusammensetzung nach einem der Ansprüche 1 bis 3 als chemikalien- und temperaturbeständiges Material zur Herstellung von Rohren, Rinnen, Behältern, Platten, Formteilen und/oder Schweißdraht.

8. Verwendung einer PVC-Zusammensetzung nach einem der Ansprüche 1 bis 3 als chemikalien- und temperaturbeständiges Material für ein Rohr, eine Rinne oder einen Behälter nach einem der Ansprüche 4 bis 6, insbesondere als chemikalienbeständige innere Wandung, ganz besonders als Liner-Verbundkomponente.

9. Verwendung eines Rohrs, einer Rinne oder eines Behälters nach einem der Ansprüche 4 bis 6 zur Durchleitung und/oder Aufbewahrung eines chemisch aggressiven Stoffes, der mindestens eine Komponente umfasst, ausgewählt aus einer Gruppe bestehend aus Kalium- oder Natriumhydroxid-Lösung mit ≤ 50% KOH oder NaOH, Kaliumchlorid-Lösung mit ≤ 350g/L KCl, Natriumchlorid-Lösung mit ≤ 350g/L NaCl, Hypochlorit mit ≤ 18% Aktivchlor, und einer konzentrierten Mineralsäure, vorzugsweise Schwefelsäure, Salzsäure, Salpetersäure oder Flusssäure.

## Claims

1. Polyvinyl chloride (PVC) composition for manufacturing pipes, channels, containers, sheets, mouldings, and/or welding rod, wherein
- a PVC resin of the composition, which comprises a first and a second resin component, has a molecular weight distribution with a number average of M_{N} = from 60 kDa to M_{N} = 70 kDa and with a weight average of M_{W} = from 114 kDa to M_{W} = 124 kDa, wherein the entire composition has a chlorine content of from 56% to 62%, and wherein
- the first resin component is an unplasticised PVC and has a molecular weight distribution with a weight average M_{W} from 140 kDa to 154 kDa and a number average M_{N} from 70 kDa to 77 kDa,
- the second resin component is a PVC resin component with an increased chlorine content in comparison to the first resin component and has a molecular weight distribution with a weight average M_{W} from 101 kDa to 113 kDa and with a number average M_{N} from 54 kDa to 63 kDa,
- the PVC composition comprises the first resin component and the second resin component in a ratio of 40:60 to 60:40,
- the PVC composition has a Vicat softening point above 90°C, and
- the PVC composition is free from impact modifiers.

2. PVC composition according to claim 1, **characterized in that** the composition is free from chalk and/or calcium and/or magnesium.

3. PVC composition according to any of the preceding claims, **characterized in that** the composition comprises tin and/or a component comprising tin.

4. Pipe, channel, or container for the passage and/or storage of chemically aggressive substances, **characterized in that** the pipe, the channel, or the container comprises a PVC composition according to any of claims 1 to 3.

5. Pipe according to claim 4, **characterized in that** the pipe is configured as a composite pipe which has an outer wall that comprises glassfiber-reinforced thermoset resin, wherein the pipe has an inner wall which comprises a PVC composition according to any of claims 1 to 3.

6. Pipe according to claim 5, **characterized in that** the inner wall has been bonded to the outer wall via at least one adhesive resin.

7. Use of a PVC composition according to any of claims 1 to 3 as material resistant to chemicals and to temperature changes for the production of pipes, channels, containers, sheets, mouldings, and/or welding rod.

8. Use of a PVC composition according to any of claims 1 to 3 as material resistant to chemicals and to temperature changes for a pipe, a channel, or a container according to any of claims 4 to 6, in particular as inner wall that is resistant to chemicals, very particularly as liner-composite component.

9. Use of a pipe, of a channel, or of a container according to any of claims 4 to 6 for the passage and/or storage of a chemically aggressive substance which comprises at least one component selected from a group consisting of potassium hydroxide solution or sodium hydroxide solution with ≤ 50% of KOH or NaOH, potassium chloride solution with ≤ 350 g/L of KCl, sodium chloride solution with ≤ 350 g/L of NaCl, hypochlorite with ≤ 18% of active chlorine, and a concentrated mineral acid, preferably sulfuric acid, hydrochloric acid, nitric acid, or hydrofluoric acid.

## Revendications

1. Composition de poly(chlorure de vinyle) (PVC) pour la fabrication de tuyaux, de gouttières, de récipients, de plaques, de pièces façonnées et/ou de fil de soudage, dans laquelle
- une résine PVC de la composition, qui comprend un premier et un second constituant de type résine, présente une distribution des poids moléculaires avec une moyenne numérique de M_{N} = 60 kDa à M_{N} = 70 kDa et une moyenne pondérale de M_{W} = 114 kDa à M_{W} = 124 kDa, dans laquelle la composition totale présente une teneur en chlore de 56% à 62%, et dans laquelle
- le premier constituant de type résine est un PVC non plastifié et présente une distribution des poids moléculaires avec une moyenne pondérale de M_{W} de 140 kDa à 154 kDa et une moyenne numérique de M_{N} de 70 kDa à 77 kDa,
- le second constituant de type résine est un constituant de type résine PVC avec une teneur en chlore accrue par rapport au premier constituant de type résine, et présente une distribution des poids moléculaires avec une moyenne pondérale de M_{W} de 101 kDa à 113 kDa et une moyenne numérique de M_{N} de 54 kDa à 63 kDa,
- la composition de PVC présente le premier constituant de type résine et le second constituant de type résine dans une relation de 40 : 60 à 60 : 40,
- la composition de PVC présente une température de ramollissement Vicat supérieure à 90°C, et
- la composition de PVC est exempte d'agents modifiant la résistance au choc.

2. Composition de PVC selon la revendication 1, **caractérisée en ce que** la composition est exempte de craie et/ou de calcium et/ou de magnésium.

3. Composition de PVC selon l'une quelconque des revendications précédentes, **caractérisée en ce que** la composition comprend de l'étain et/ou un constituant qui présente de l'étain.

4. Tuyau, gouttière ou récipient pour le passage et/ou la conservation de substances chimiquement agressives, caractérisé(e) en ce que le tuyau, la gouttière ou le récipient comprend une composition de PVC selon l'une quelconque des revendications 1 à 3.

5. Tuyau selon la revendication 4, **caractérisé en ce que** le tuyau est conçu en tant que tuyau composite, qui présente une enveloppe, qui comprend une résine thermodurcissable renforcée par des fibres de verre, le tuyau présentant une paroi interne qui comprend une composition de PVC selon l'une quelconque des revendications 1 à 3.

6. Tuyau selon la revendication 5, **caractérisé en ce que** la paroi interne est reliée à l'enveloppe par au moins une résine adhésive.

7. Utilisation d'une composition de PVC selon l'une quelconque des revendications 1 à 3 comme matériau résistant aux produits chimiques et à la température pour la fabrication de tuyaux, de gouttières, de récipients, de plaques, de pièces façonnées et/ou de fil de soudage.

8. Utilisation d'une composition de PVC selon l'une quelconque des revendications 1 à 3 comme matériau résistant aux produits chimiques et à la température pour un tuyau, une gouttière ou un récipient selon l'une quelconque des revendications 4 à 6, en particulier comme paroi interne résistant aux produits chimiques, tout particulièrement comme constituant composite de type doublure.

9. Utilisation d'un tuyau, d'une gouttière ou d'un récipient selon l'une quelconque des revendications 4 à 6 pour le passage et/ou la conservation d'une substance chimiquement agressive, qui comprend au moins un constituant choisi dans le groupe constitué par une solution d'hydroxyde de potassium ou de sodium présentant ≤ 50% de KOH ou de NaOH, une solution de chlorure de potassium présentant ≤ 350 g/l de KCl, une solution de chlorure de sodium présentant ≤ 350 g/l de NaCl, l'hypochlorite présentant ≤ 18% de chlore actif et un acide minéral concentré, de préférence l'acide sulfurique, l'acide chlorhydrique, l'acide nitrique ou l'acide fluorhydrique.
